(19) Europäisches Patentamt
European Patent Office
Office européen des brevets

(11) EP 0 880 130 A2

(12) **EUROPEAN PATENT APPLICATION**

(43) Date of publication:
**25.11.1998 Bulletin 1998/48**

(51) Int Cl.$^6$: **G11B 7/013**

(21) Application number: **98303960.3**

(22) Date of filing: **19.05.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.05.1997 JP 128638/97**

(71) Applicant: **NIKON CORPORATION Tokyo 100 (JP)**

(72) Inventors:
• **Nishiyama, Madoka c/o Nikon Corporation Chiyoda-ku, Tokyo 100 (JP)**
• **Morita, Seiji c/o Nikon Corporation Chiyoda-ku, Tokyo 100 (JP)**

(74) Representative: **Burke, Steven David et al R.G.C. Jenkins & Co. 26 Caxton Street London SW1H 0RJ (GB)**

(54) **Optical disk having increased erasure efficiency**

(57) A phase change type optical disk in which recording is performed in land portions and groove portions, and which eliminates the detrimental effects of narrowing of the track pitch. The optical disk includes a disk substrate having a refractive index n and performs recording in land portions and in groove portions using a phase change between amorphous and crystalline, with an illuminating light having wavelength $\lambda$. A groove depth, which is the difference in level between a land portion and a groove portion, is limited in the range of numerical values of $\lambda/(3.78n)$ or greater. Moreover, the groove depth may be set to any value close to $\lambda/(3n)$, $\{\lambda/(3n) + \lambda/(2n)\}$, $\{\lambda/(6n) + \lambda/(2n)\}$. Furthermore, while the groove depth is made deep, the roughness width of the groove sidewalls is kept to 50 nm or less, or to 20 nm or less. Moreover, the taper angle of the groove sidewalls is set at 60° or more, 80° or more, or 84° or more.

LIGHT

$\lambda = 685nm$

$n = 1.52$

GROOVE DEPTH d

1..DISK SUBSTRATE (SiO$_2$) — 1.2mm
2..PROTECTIVE LAYER (ZnS–SiO$_2$) — 135nm
3..RECORDING LAYER (GeSbTe) — 25nm
4..PROTECTIVE LAYER (ZnS–SiO$_2$) — 20nm
5..REFLECTIVE LAYER (Al) — 150nm

FIG. I

EP 0 880 130 A2

## Description

## CROSS REFERENCE TO RELATED APPLICATIONS

This application is based upon and claims priority of Japanese Patent Application No. 09-128638, the contents of which are incorporated herein by reference.

## BACKGROUND OF THE INVENTION

1. Field of the Invention

The present invention relates to an optical disk, and, more particularly, the present invention relates to an optical disk having improved erasure efficiency.

2. Description of the Related Art

Optical disks have recently come into general use as high capacity memory in consumer electronics, calculators, and the like. Furthermore, the next generation of optical disks requires additional increased capacity, higher rotational speed, overwriting, and the like to accommodate the requirements of the multimedia age, and the greater amount and diversity of information associated therewith.

Methods of increasing the capacity of an optical disk by increasing the track density have been developed wherein signals are recorded in both a land portion and a groove portion of the optical disk (hereinafter referred to as "land/groove recording"). Various types of land/groove recording are known to design a larger capacity optical disk having land portions and groove portions. For example, in performing land/groove recording, the track pitch is narrowed to about half of that of the conventional optical disk. Because the track pitch is narrowed, crosstalk occurs during playback wherein the signals of an adjacent track mix with the signals of the playback track. Further, when performing an erasing operation, the signals of the adjacent track tend to be erased by cross-erasure, or the signals projecting into the adjacent track tend to become recorded, and cross-writing and the like tend to occur. Moreover, because the effects of cross-erasure and cross-writing are cumulative, the influence of the detrimental effects described above is very evident in an optical disk which repeats recording and playback.

Furthermore, a low CNR (carrier/noise ratio) occurs accompanying a narrowing of the track pitch causing detrimental effects because the output of the playback signal itself decreases. Still further, the erasure characteristics also decrease accompanying a narrowing of the track pitch. More particularly, if recording marks are written to the full width of the narrow track so that they project a little, then at the time of overwriting erasure remnants occur causing the decrease in erasure characteristics.

Because of the detrimental effects described above, the conventional optical disk which performs land/groove recording is limited to a track pitch of about 0.8-0.7 $\mu$m, and it is considered difficult to further narrow the track pitch. Further, the reduction of cross-writing, cross-erasure and noise are important problems which are not limited to optical disks having land portions and groove portions.

Furthermore, optical recording and playback systems having high density, high capacity, high access speed, high recording and playback speeds, and the like characteristics, have recently been put to practical use. Increasing amounts of research and development time is being devoted to improve these optical recording and playback systems.

The optical information recording media used for the conventional optical recording and playback systems are in the form of disks, and are broadly classified into a read-only type for only playback dedicated use and a recordable type. The read-only type of optical recording medium has projections or hollows, referred to as pits, formed in a recording layer, and information is represented according to the presence or absence of the pits, or information is represented according to the length of the pits. The recordable type of optical recording medium includes a type which can record one time only (referred to as write-once or DRAW), and a type which can repeat recording and erasure a number of times. The former type of optical recording medium includes a recording layer consisting of Te, Te-C, Te-Se-Pb, resins which include pigments, and the like, in which holes (pits) open when illuminated with a laser beam. Information is represented by the presence or absence of the pit or by the length of the pit. At present, the latter type of optical recording medium in practical use includes a phase change type (crystalline-amorphous) and a magneto-optical type.

The phase change type has a crystalline phase recording layer consisting of $TeO_2$-Te-Ge, GeSbTe, or InSe. By illuminating the crystalline phase recording layer with an intense laser beam, the crystalline phase is heated to the melting point or above, and by rapid cooling forms marks in the amorphous state. Information is represented by the presence or the absence of these marks or by the length of the marks. To erase the marks, a laser beam for use in erasure heats the marks, which are in an amorphous state, to the crystallization temperature or above, and brings about crystallization (erasure) by slow cooling. Recording of information is performed by illuminating the optical recording medium with a recording laser beam immediately after the erasure laser beam. Thus, recording and erasure are repeated.

The magneto-optical type of optical recording medium includes a recording layer consisting of a magnetic thin layer which can be perpendicularly magnetized. Initialization is performed to make the direction of magnetization uniformly upward or downward. Then, upon illuminating the magneto-optical recording medium with a laser beam and simultaneously applying a recording magnetic field, a mark is formed in which the direction of magnetization is reversed. Information is represented by the presence or absence of these marks or by their length. When the marks are illuminated with linearly polarized light (weak laser beam), the plane of polarization of the reflected light or the transmitted light is rotated $\theta_k$. This is termed the Kerr effect or the Faraday effect. In contrast, the portions of "ground" outside the marks rotates by $-\theta_k$. Consequently, by passing the reflected light or transmitted light through a polarizing element (detector), the marks can be interpreted as a change in the amount of light. The change in the amount of light can be converted to a change in the intensity of an electrical signal by a photoelectric converter.

Representative examples of the magneto-optical recording layers include rare earth - transition metal alloys, for example, TbFe, GdFe, GdCo, DyFe, GdTbFe, GdFeCo and the like single layer films, or GdFe/TbFe, GdFeCo/TeFeCo and the like 2-layer films.

SUMMARY OF THE INVENTION

It is an object of the present invention to provide an optical disk which eliminates the detrimental effects described above with respect to the conventional optical disk and further narrows the track pitch.

It is another object of the present invention to provide an optical disk having a marked reduction in cross-talk.

It is another object of the present invention to provide an optical disk which eliminates the detrimental effects arising when the groove depth is made deeper than the groove depth of the conventional optical disk.

Objects and advantages of the present invention are achieved in accordance with embodiments of the present invention with an optical disk on which data is recorded in respective land portions and groove portions using a phase change between amorphous and crystalline, the optical disk including a disk substrate having a refractive index of n, wherein $\lambda$ is the wavelength of an illuminating light, such as a laser light source, a groove depth, which is a difference in level between the land portions and the groove portions, is equal to or greater than $\lambda/(3.78n)$ and a groove sidewall has a roughness width of 50 nm or less.

In accordance with embodiments of the present invention, the heat transmission distance between the land portions and the groove portions is made long. Because the heat transmission distance between the land portions and the groove portions is lengthened, heat caused by the illumination of the illuminating light is poorly transmitted to the adjacent tracks, and cross-erasure, cross-writing and similar detrimental effects due to heat transmission are reduced.

Moreover, in accordance with embodiments of present invention, since the heat transmission to adjacent tracks is poor, the land portions and groove portions both tend to accumulate heat. Therefore, while erasing a record mark, an amorphous mark in the vicinity of the crystallization temperature accumulates heat for a long time. As a result of the accumulation of heat, the crystallization efficiency of the amorphous mark increases, and the erasure efficiency increases.

In particular, the value of the cross-writing resistance Pw/Pp (described hereinbelow) is maintained by setting the groove depth equal to or greater than $\lambda/(3.78n)$ when the track pitch is about 0.6 μm. By setting the groove depth in this manner, the detrimental effects of a narrowing of the track pitch are reduced, and the track pitch can be narrowed below 0.6 μm.

By making the groove depth deep, playback noise originating in the roughness of the groove sidewalls increases. Consequently, by reducing the roughness width of the conventional optical disk (which was 150 nm or more) to a maximum of 50 nm, the noise level is reduced and a CNR of 45 dB is maintained. The CNR value of 45 dB is a value which satisfies the standard CNR value of 45 dB set by ISO standards, and the like.

In accordance with embodiments of the present invention, the optical disk includes a groove sidewall with a roughness width of 20 nm or less. By making the groove depth deep, playback noise originating in the roughness of the groove sidewalls increases. Consequently, by keeping the roughness width to a maximum of 20 nm, the noise level is reduced and a CNR of 48 dB is maintained. The CNR value of 48 dB is a value which maintains a margin of 3 dB over the standard CNR value of 45 dB set by ISO standards and the like.

In accordance with embodiments of the present invention, the optical disk has a track pitch that is narrower than 1.18 $\lambda$.

In accordance with the embodiments of the present invention, the optical disk has a groove depth in the range of $\lambda/(3.78n)$ to $\lambda/(1.13n)$.

In accordance with embodiments of the present invention, the optical disk has groove depth of $\lambda/(3n)$.

In accordance with embodiments of the present invention, the optical disk has a groove depth of $\{\lambda/(3n) + \lambda/(2n)\}$.

In accordance with embodiments of the present invention, the optical disk has a groove depth of $\{\lambda/(6n) + \lambda/(2n)\}$.

By setting the optical path difference between the land portions and the groove portions in the above manner, the cross-talk from adjacent tracks can be made a minimum.

In accordance with embodiments of the present invention, the optical disk includes a groove sidewall having a taper angle of 60 degrees or more.

Normally, the groove sidewall is formed with a taper angle. Because of the taper angle, the width of the groove seen from the optical pickup enlarges as the groove depth deepens. At this time, because signals from the tracks of both sides are recorded projecting into the groove sidewalls, cross-writing resistance is worsened to the extent of cross-writing to the groove sidewalls. The result of trials demonstrated that by making the taper angle 60° or more, one (1) or more values can be obtained with practical applicability to cross-writing resistance.

In accordance with embodiments of the present invention, the optical disk includes a groove sidewall having a taper angle of 80 degrees or more. The result of trials demonstrated that by making the taper angle 80° or more, 1.1 or a greater value can be sufficiently obtained with practical applicability to cross-writing resistance.

In accordance with embodiments of the present invention, the optical disk includes a groove sidewall having a taper angle of 84 degrees or more. The result of trials demonstrated that by making the taper angle 84° or more cross-writing resistance can be greatly increased.

## BRIEF DESCRIPTION OF THE DRAWINGS

These and other objects and advantages of the invention will become apparent and more readily appreciated from the following description of the preferred embodiments, taken in conjunction with the accompanying drawings of which:

FIG. 1 is a cross-sectional diagram of a basic structure (quenching structure) of a phase change type of optical disk in accordance with embodiments of the invention.

FIG. 2 is a graph showing the values of erasure efficiency in the case of various settings of erasure power in accordance with embodiments of the invention.

FIG. 3 is a graph showing a relationship between the cross-writing resistance Pw/Pp and groove depth in accordance with embodiments of the invention.

FIG. 4 is a graph showing a relationship between the cross-writing resistance Pw/Pp and the track pitch in accordance with embodiments of the invention.

FIG. 5 is a graph showing a relationship between groove depth and crosstalk in accordance with embodiments of the invention.

FIG. 6 is a graph showing a relationship between crosstalk and various values of recording power in accordance with embodiments of the invention.

FIGS. 7A and 7B are electron microscope photographs of a stamper surface in accordance with embodiments of the invention.

FIG. 8 is a diagram showing an improvement effect by reducing the roughness of the groove sidewalls in accordance with embodiments of the invention.

FIG. 9 is a diagram illustrating a taper angle of the groove sidewalls in accordance with embodiments of the invention.

FIG. 10 is a graph showing a relationship between the cross-writing resistance Pw/Pp and various values of the taper angle in accordance with embodiments of the invention.

FIG. 11 is a cross sectional diagram showing the basic structure (quenching structure) of a phase change type of optical disk in accordance with embodiments of the invention.

FIG. 12 is a graph showing a relationship between signal level and pit depth in accordance with embodiments of the present invention.

## DETAILED DESCRIPTION OF THE PREFERRED EMBODIMENTS

Reference will now be made in detail to the preferred embodiments of the present invention, examples of which are illustrated in the accompanying drawings, wherein like reference numerals refer to like elements throughout.

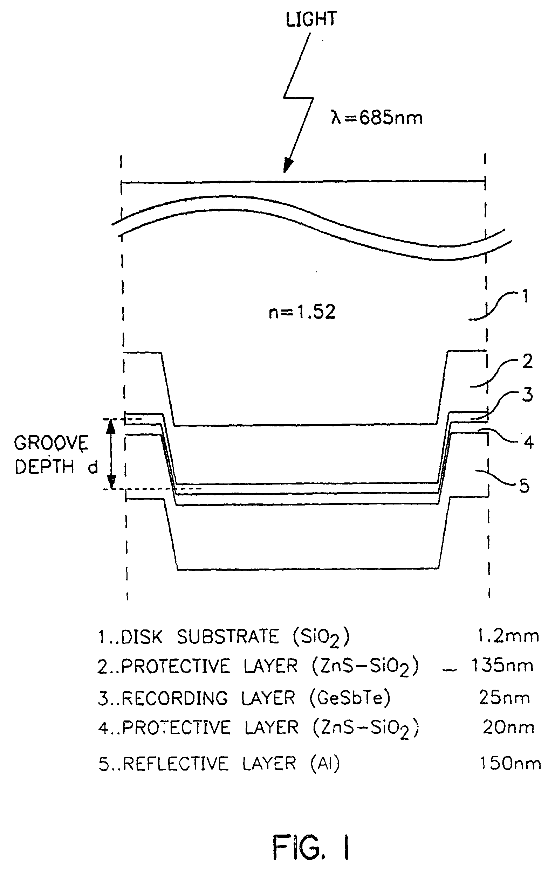

FIG. 1 is a cross-sectional diagram (quenching structure) of a phase change type of optical disk in accordance with embodiments of the present invention.

As shown in FIG. 1, the disk substrate 1 is a disk-shaped glass 2P plate having a refractive index n = 1.52, having a diameter of 86 millimeters (mm), an inner diameter of 15 mm, and a thickness of 1.2 mm. A groove is formed in spiral form in the surface of the disk substrate 1, creating land portions and groove portions. A groove depth d is set to a value of 120 nm or more, deeper than the prior art groove depth of 40-85 nm.

The optical disk includes a first protective layer 2, a recording layer 3, a second protective layer 4, and a reflective layer 5 formed in succession on the surface of the disk substrate 1. The first protective layer 2 is preferably a 135 nanometer (nm) thick layer formed of ZnS-$SiO_2$. The recording layer 3 is preferably a 25 nm thick layer formed of a GeSbTe alloy. The second protective layer 4 is preferably a 20 nm thick layer formed of ZnS-$SiO_2$. The reflective layer 5 is preferably a 150 nm thick layer formed of Al.

An optical pickup (not shown in the drawing) used for evaluation measurement of the optical disk has a laser light wavelength of 685 nm, and an aperture number (NA) of the objective lens 0.6.

The erasure efficiency of the optical disk was measured when performing overwriting. The erasure efficiency characteristics of the optical disk when overwriting was performed will now be described below in accordance with the results of the measurement.

For an optical disk as subject, with the track pitch set at 0.6 μm, and the groove depth set at 160 nm, erasure efficiency was measured according to the following operations:

(1) Record 3T mark(s);
(2) Playback the 3T mark(s); and
(3) Record 8T mark(s) on top of the 3T mark(s),

wherein the length of a mark is set according to the recording frequency and the linear speed of the optical disk. A 3T mark is a mark recorded at a time (recording frequency of 3T) of 3T. An 8T mark is a mark recorded at a time (recording frequency of 8T) of 8T.

Finally, after the above-described operations (1)-(3) have been repeated one-thousand (1,000) times, 3T mark(s) are recorded. While playing back the optical disk, a comparative measurement of the 8T portion (erasure remnants at overwrite time) and 3T portion is made to determine the erasure efficiency.

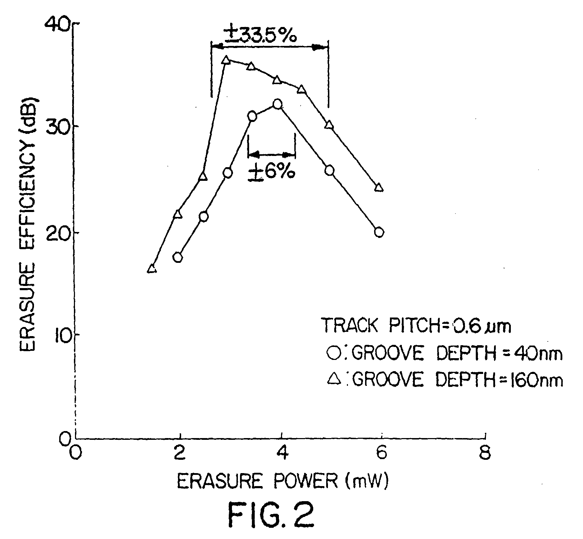

FIG. 2 is a graph illustrating a comparative example of the values of erasure efficiency in the case of various settings of the erasure power. The circles shown in the FIG. 2 indicate the erasure efficiency in a prior art optical disk (groove depth = 40 nm). The triangles shown in FIG. 2 indicate the erasure efficiency in an optical disk having a groove depth of 160 nm in accordance with the present preferred embodiment of the invention. As shown in FIG. 2, the erasure efficiency of the optical disk in accordance with the present preferred embodiment of the invention is increased by 3-10 dB overall in comparison with the prior art optical disk.

Because of the increased erasure efficiency, for example, when an erasure of 30 dB or more is considered to be a range for practical use, in accordance with the present preferred embodiment of the invention, a 33.5% change in the margin of laser power can be maintained, enlarging the ± 6% margin of change of laser power of the prior art.

Thus, in accordance with embodiments the present invention, the erasure efficiency at the time of overwriting is increased resulting in the following advantages.

Firstly, by making the groove depth deep, the thermal transmission path between land portions and groove portions becomes long. As a result of the lengthened thermal transmission path, the transmission of irradiation heat to adjacent tracks becomes poor, and heat tends to collect in the tracks. Therefore, the spread of heat when recording and when erasing is limited to about the same range, and erasure remnants of the mark periphery are less likely to occur.

Moreover, since the heat transmission path between the land portions and the groove portions is made long, heat becomes likely to collect on a track. Because of the heat collecting on a track, when erasing a recording mark the amorphous portions remain in the vicinity of the crystallization temperature for a long time. As a result, the crystallization efficiency of an amorphous portion is increased, and the erasure efficiency increases. In the above-described manner, the erasure efficiency is improved by making the groove depth deep, and a narrower track pitch can be designed resulting in increased transmission rates.

The cross-writing resistance of the optical disk was measured. A description of the results of the measurement of the cross-writing resistance will now be provided below.

Cross-writing resistance is measured according to the following operations. Firstly, the whole optical disk is made a crystalline structure (erasure state). For one (1) track on the optical disk, single frequency recording pits having a length of 0.4 μm are recorded at linear speed of 5 m/sec. The value of the recording power is determined at this time such that the CNR and the erasure efficiency become optimum. The optimum recording power is Pp.

Next, single frequency recording pits having a length of about 0.43 μm are recorded for the adjacent groove portions on both sides, respectively, one-hundred (100) times. After recording the single frequency recording pits, returning to the land portion, CNR measurement is performed. At this time, the value of the recording power Pw at which the CNR begins to fall 0.5 dB is determined. The ratio of the recording power to the optimum recording power Pw/Pp is calculated and is taken to be the cross-writing resistance.

When the cross-writing resistance is one (1) or less, when a predetermined track is recorded at the optimum recording power Pp, the CNR has fallen by 0.5 dB or more. Because of the drop in CNR, when the cross-writing resistance Pw/Pp is one (1) or less, it is about not suitable for practical use.

On the other hand, when the cross-writing resistance Pw/Pp is one (1) or more, when a predetermined track is recorded at an optimum recording power Pp, the drop of the CNR in the adjacent tracks can be kept to 0.5 dB or less. Because the drop of CNR in adjacent tracks can be kept to 0.5 dB or less, the region in which the cross-writing resistance Pw/Pp is one (1) or more is the region in which practical use is possible. In actuality, in order to estimate the margin of change of recording power, the cross-writing resistance Pw/Pp is preferably 1.1 or more.

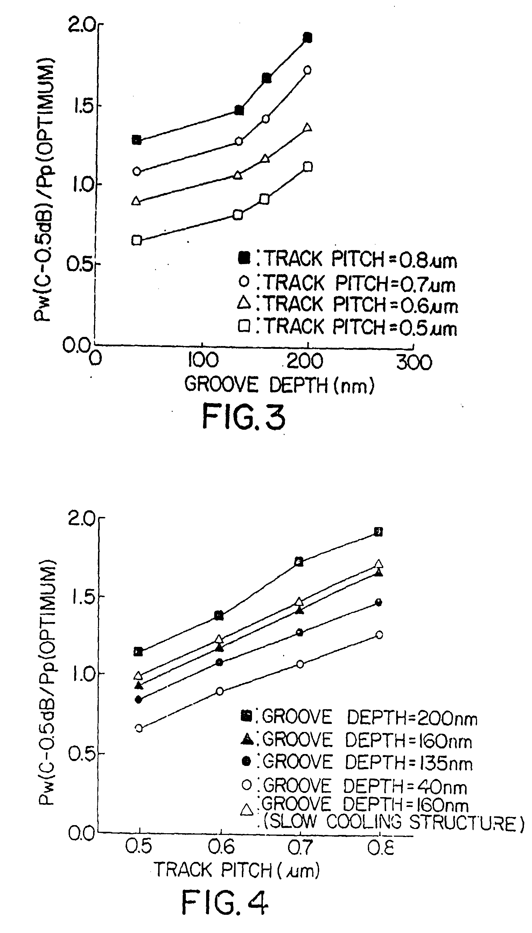

FIG. 3 is a graph illustrating respective measurement results of the cross-writing resistance Pw/Pp for optical disks with the track pitch and the groove depth variously set. As shown in FIG. 3, the cross-writing resistance Pw/Pp increases as the groove depth becomes deeper. In the case of a track pitch of 0.6 μm, by setting the groove depth to 120 nm or more, a value for the cross-writing resistance Pw/Pp of one (1) or more can be maintained. Specifically, by making the groove depth 120 nm or more, a track pitch of 0.6 μm or less can be realized, exceeding the prior art track pitch limit of 0.7 μm.

The critical condition of a groove depth of 120 nm is found by optically converting $\lambda/(3.78n)$, wherein the wavelength of the laser light is $\lambda$, and the refractive index of the disk substrate is n.

FIG. 4 is a graph illustrating the relationship between the cross-writing resistance Pw/Pp and the track pitch in accordance with embodiments of the present invention.

As shown in FIG. 4, when the groove depth is set to 160 nm, it is possible to maintain a cross-writing resistance Pw/Pp suitable for practical use, while narrowing the track pitch as far as 0.53 μm. Furthermore, when the groove depth is set to 200 nm, even when narrowing the track pitch to 0.5 μm or less, a cross-writing resistance Pw/Pp suitable for practical use can be maintained.

The results of measurements of crosstalk in accordance with embodiments of the present invention will now be discussed below. In accordance with a prior art land/ groove recording method, it was known that crosstalk from adjacent tracks could be a minimum when the groove depth was set at about $\lambda/(6n)$. In accordance with embodiments of the present invention, crosstalk is minimized by setting the groove depth to $\lambda/(3.78n)$ or more. More particularly, by setting the groove depth d close to the following values, it was initially determined that crosstalk became a minimum:

$$d = \lambda/(3n) \quad (1)$$

$$d = \lambda/(6n) + \lambda/(2n) \quad (2)$$

$$d = \lambda/(3n) + \lambda/(2n) \quad (3)$$

Furthermore, as a result of the optical calculation, a general value of the groove depth d at which crosstalk becomes a minimum was found for the first time to be represented by

$$d = \lambda/(3n) + p\lambda/(2n) \quad (4)$$

(where the coefficient p = 0, 1, 2, ...)

$$d = \lambda/(6n) + m\lambda/(2n) \quad (5)$$

(where the coefficient m = 0, 1, 2, ...).

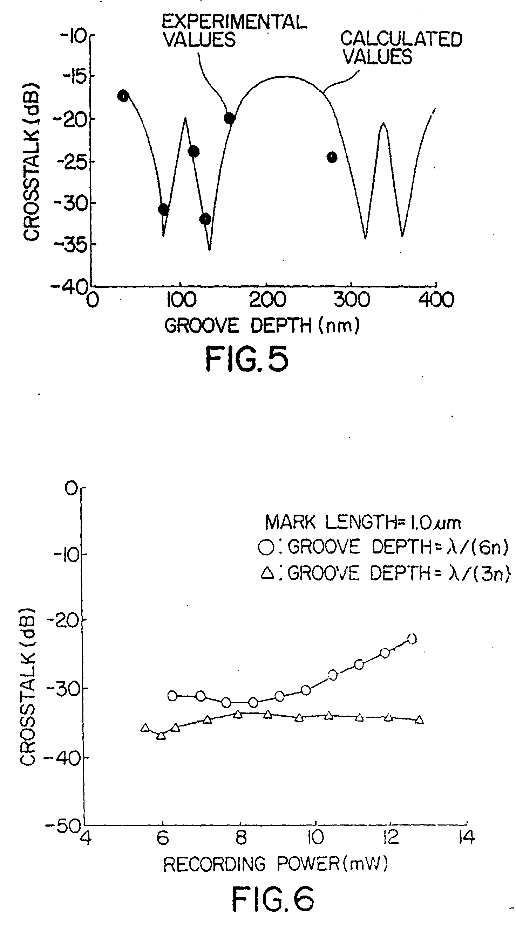

FIG. 5 is a graph illustrating a relationship between groove depth and crosstalk in accordance with embodiments of the present invention. As shown in FIG. 5, the measurement values are indicated by black circles and the solid line indicates calculated values.

As shown in FIG. 5, crosstalk becomes a minimum close to groove depth d = 135 nm, 310 nm, 360 nm. These values of groove depth are respectively positioned close to the values found from Equations (1)-(3) above. Therefore, the crosstalk can be effectively suppressed by setting the groove depth d in the above-described manner.

FIG. 6 is a graph illustrating a relationship between crosstalk and recording power in accordance with the present invention. As shown in FIG. 6, the circles represent measurement data when the groove depth is set to $\lambda/(6n)$, as in the prior art. The triangles in FIG. 6 represent measurement data when the groove depth is set to $\lambda/(3n)$.

As shown in FIG. 6, when the groove depth is $\lambda/(3n)$, even when the recording power changes greatly, the crosstalk only changes slightly. More particularly, the crosstalk only changes slightly because the deep groove depth causes the projection of the recording mark width to be limited by the groove sidewalls.

Accordingly, by setting the groove depth d based on Equations (1)-(3), the change in crosstalk during normal conditions is nominal, and, even during unfavorable conditions, such as large changes of the recording power of the optical pickup unit, the crosstalk can be strongly suppressed.

The results of measurement of the optical disk performance with respect to the roughness of the groove sidewall will now be discussed below.

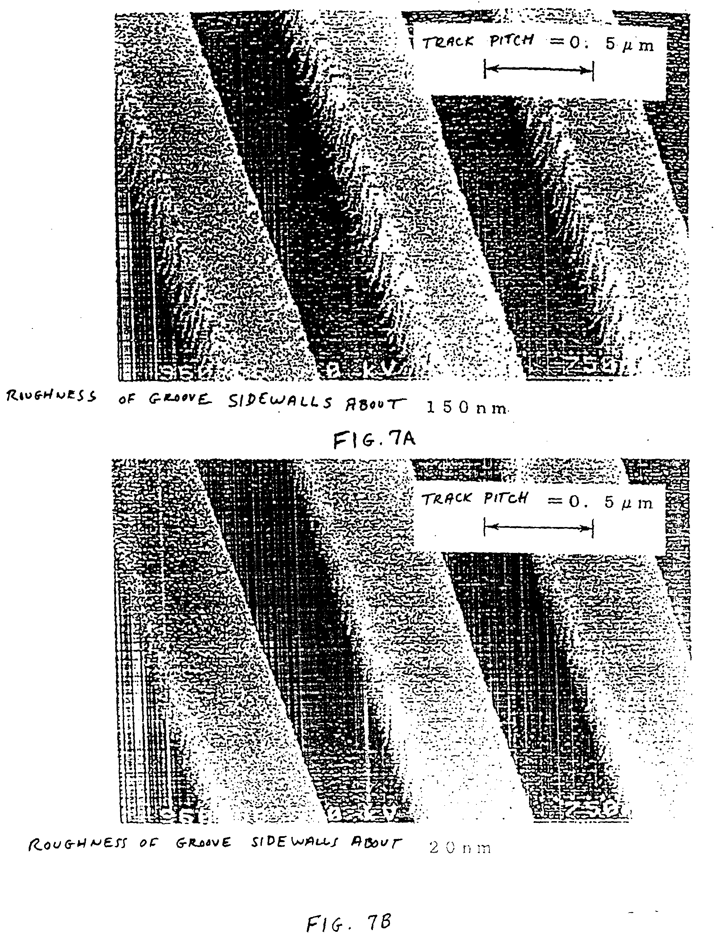

FIG. 7A is a photograph of groove walls having a roughness width of about 150 nm. In accordance with the present invention, the roughness width of the groove sidewalls is defined as follows. Generally, the groove sidewalls include minute plural irregularities (roughnesses). The roughness width of the groove sidewalls refers to the dimension (i.e., height, depth or width) of a convex or concave portion of the irregularity. Accordingly, a roughness width of 50 nm or less means that the height, depth or width of a convex portion or a concave portion is 50 nm or less. Roughness can be observed using a high-resolution scanning electron microscope (HR-SEM), STM, AFM or the like. Further, an etching method is the preferred method of making the roughness width 50 nm or less. FIG. 7B is a photograph of groove walls having a roughness width of 20 nm or less. Furthermore, a stamper of FIG. 7B was prepared by normalizing each factor for the well known mastering process.

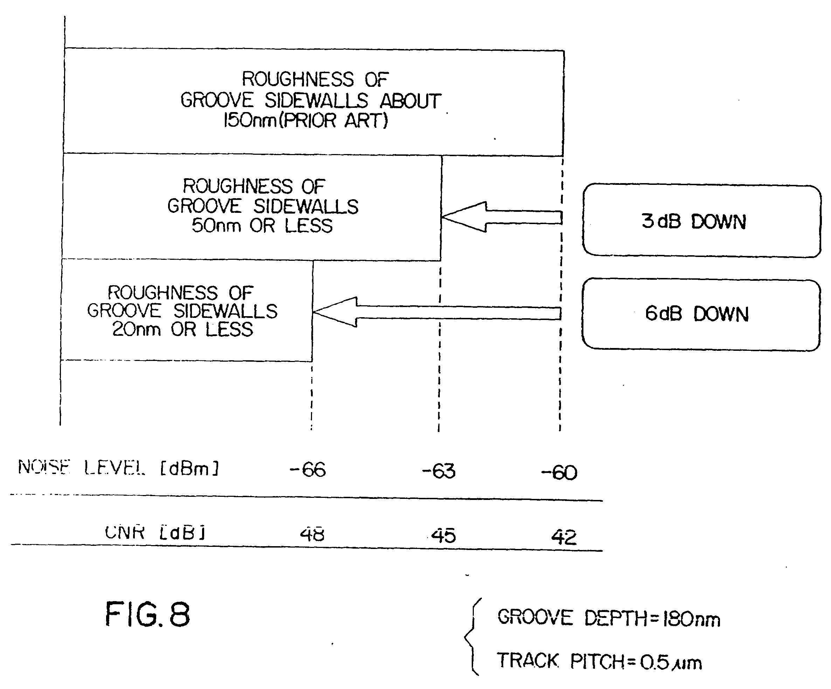

FIG. 8 is a diagram showing the improvement effect achieved by reducing the roughness width of the groove sidewalls in accordance with the present invention. As shown in FIG. 8, when a roughness width of the groove sidewalls is 150 nm or more, and at the noise level of playback noise (-60 dBm), the CNR is 42 dB. On the other hand, when a roughness width of the groove sidewalls is 50 nm or less, the noise level of playback noise is improved as far as (-63 dBm), and the CNR is improved to 45 dB. Furthermore, when the roughness width of the groove sidewalls is 20 nm or less, the noise level of playback noise is improved to (-66 dBm), and the CNR is improved to 48 dB.

The results of measurement of cross-writing resistance with respect to the taper angle of the groove sidewalls will now be discussed below.

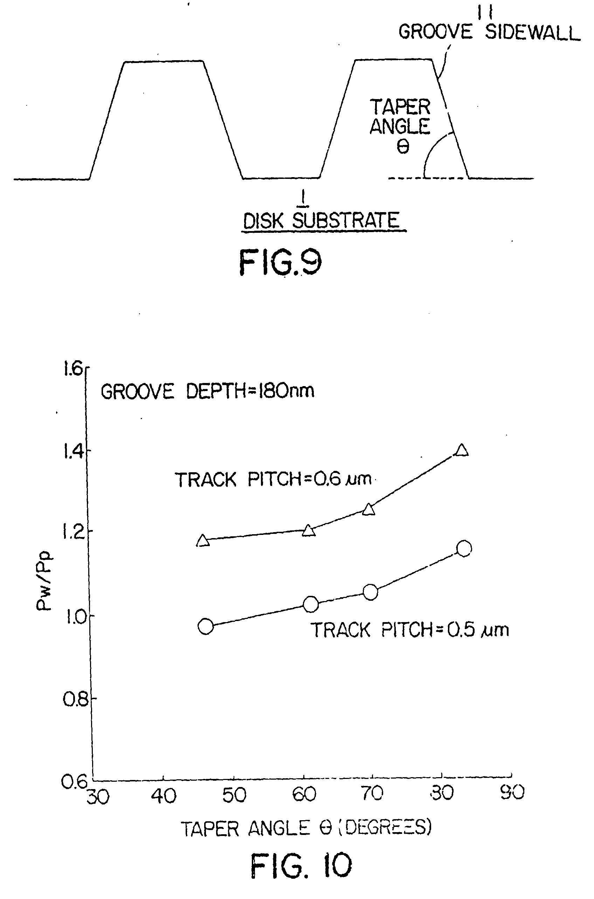

FIG. 9 is a diagram defining the taper angle of the groove sidewalls in accordance with embodiments of the present invention. As shown in FIG. 9, the acute angle $\theta$ between the surface of the groove sidewall and the substrate surface of the disk is defined as the taper angle $\theta$.

FIG. 10 is a graph illustrating the cross-writing resistance Pw/Pp with respect to the taper angle $\theta$ when the taper angle $\theta$ is variously set in accordance with embodiments of the present invention. Furthermore, the groove depth of the optical disk used for the measurements shown in FIG. 10 is 180 nm.

As shown in FIG. 10, the cross-writing resistance increases as the taper angle becomes steeper (closer to 90°). The cross-writing resistance increases as the taper angle is made steep because the width of the groove seen from the optical pickup becomes narrow, and the crosswriting portion with respect to the groove sidewall decreases. More specifically, when the taper angle is set to 60° or more, even at a track pitch of 0.5 $\mu$m, the cross-writing resistance can be maintained at a value of one (1) or more, at which practical use is possible.

Moreover, when the taper angle is set to 80° or more, even at a track pitch of 0.5 $\mu$m, the cross-writing resistance can be maintained at a value of 1.1 or more, at which practical use is possible.

Furthermore, when the taper angle is set to 84° or more, the width of the groove sidewalls seen from the track pitch can be neglected, and the cross-writing resistance increases sharply.

In accordance with another preferred embodiment of the present invention, the optical disk is a phase change type of optical disk including a recording layer 3 which is preferably GeSbTe, and having ZnS-SiO$_2$ layers including nitrides formed in the layers above and below the recording layer 3. By adding nitride to the ZnS-SiO$_2$ layer, the number of rewritings of the phase change type optical disk can be increased.

The ZnS-SiO$_2$ layers of the phase change optical disk are formed by RF sputtering. The gas pressure at the time of sputtering is controlled to about 0.1 mTorr - 10 mTorr. The nitride is added to the ZnS-SiO$_2$ layer by the introduction of Ar and N$_2$ during the formation of the ZnS-SiO$_2$ layer. Sputtering is performed at a quantity of N$_2$ of 0.1 $\mu$Torr or more. Further, the molar ratio of the ZnS and SiO$_2$ in the formed ZnS-SiO$_2$ layer is 8:2.

The performance of a disk (hereinafter referred to as Disk A) having nitride added to the ZnS-SiO$_2$ layer in the layers above and below the recording layer in accordance with the present preferred embodiment of the invention, and a conventional disk recording medium manufactured by a conventional method (hereinafter referred to as Disk B) are compared below. The wavelength ($\lambda$) of a semiconductor of the optical pickup used in the evaluation of the disks is 685 nm, and a condensing lens is used having a numerical aperture (NA) 0.6.

Firstly, the results of the evaluation of the disks with respect to erasure efficiency will be described below.

In accordance with the present preferred embodiment of the invention, erasure efficiency is measured according to the following operations. Firstly, (1) a 3T mark is recorded, (2) the 3T mark is read, and (3) an 8T mark is overwritten. The above operations (1)-(3) are then repeated one-hundred (100) times. After repeating the above operations (1)-(3), a 3T mark is recorded. A comparison of the 8T signal and the 3T signal is then made, and the erasure efficiency is respectively determined.

When the track pitch is 0.6 $\mu$m, and Disk A and Disk B are compared, it is determined that the erasure efficiency of Disk A increased by 3 dB or more. Furthermore, when the groove depth is about 160 nm, it is determined that there is a further increase of erasure efficiency in Disk A.

The results of the evaluation of the disks relating to repetitive recording characteristics (overwrite cycle characteristics), will now be described below.

In accordance with the prior art, when recording was repeated 100,000 times, jitter increased, and the overwriting characteristics became poor. However, in accordance with the present preferred embodiment of the invention, the optical disk (Disk A) having layers with nitride added to the ZnS-SiO$_2$ in the layers above and below the recording layer 3 showed no change in jitter, even when recording is repeated 170,000 times and more. Further, when the track pitch is 0.6 $\mu$m, it was determined that the overwrite cycle characteristics of Disk A increased in comparison with Disk B.

The nitrogen concentration in the film (i.e., the layers above and below the recording layer) was measured by auger electron spectroscopy (AES) and x-ray photoelectron spectroscopy (XPS). There is no particular limitation to the average nitrogen concentration in the film, but the average nitrogen concentration is preferably about 0.01 - 40 atom%.

Furthermore, providing the average nitrogen concentration in the ZnS-SiO$_2$ layer at the interface of the recording layer produced much better repetitive recording characteristics than nitrogen in the interior of the ZnS-SiO$_2$ layer. Moreover, providing the average nitrogen concentration in the ZnS-SiO$_2$ layer within 10 nm from the interface of the recording layer produced much better recording characteristics than nitrogen in the interior of the ZnS-SiO$_2$ layer.

In particular, providing the average nitrogen concentration in a portion of the ZnS-SiO$_2$ layer having a thickness of 1 nm from the interface of the ZnS-SiO$_2$ layer and the recording layer was determined to be preferable to providing two or more times the average nitrogen concentration in a portion of the ZnS-SiO$_2$ outside of the 1 nm thick portion. Furthermore, the film can be manufactured such that the nitrogen concentration becomes gradually smaller from the interface of the ZnS-SiO$_2$ layer and the recording layer.

Another preferred embodiment of the present invention will now be described below. In accordance with the present preferred embodiment, a plastic substrate is used as the disk substrate 1. The plastic substrate is generally PMMA (polymethyl methacrylate), polycarbonate, polystyrene, resins and the like transparent materials. However, in accordance with the present preferred embodiment, the plastic substrate is preferably molded from polycarbonate resin by an injection molding method. Further, a surface layer portion of the molded substrate and an interior of the molded substrate are preferably molded such that the respective densities are different.

In accordance with the present preferred embodiment, a substrate having a diameter of 120 mm, and a thickness of 0.6 mm was molded for use in digital versatile disks (DVDs) and the like. Molding of the substrate is performed at an injection pressure of the resin during molding of 30t, with a metal mold at 120°C, a resin temperature of 340°C or more, and a cycle time of 12 seconds. The molded plastic substrate has a different density in the surface portion in comparison with an interior portion. For example, the surface portion preferably has a thickness in a range of about 60-500 nm. The thickness of the surface portion can be confirmed by HR-SEM.

Phase change disks having a structure (substrate/ $ZnS-SiO_2$/GeSbTe/$ZnS-SiO_2$/AlTi) were prepared using the molded plastic substrate, and having a groove depth, which is the difference in level between the land portions and the groove portions, of $\lambda/(3.78n)$ or more. The characteristics of the phase change disks thus prepared were then evaluated.

The wavelength ($\lambda$) of the semiconductor of the optical pickup used in the evaluation of the disks is 685 nm, and a condensing lens is used having a numerical aperture (N.A.) 0.6. The results of evaluation in the phase change disks demonstrated that the disks provided good birefringence, low noise, and good transcription, and with good mechanical characteristics (e.g., warping). Moreover, similar results were obtained with magneto-optical disks and the like, other than phase change disks.

Furthermore, in ROM disks (replay-only disks such as CDs and DVDs) using a substrate having different density in the surface portion and the interior, no problems occurred with characteristics, such as the optical characteristics, the mechanical characteristics, and the like.

In accordance with another preferred embodiment of the present invention, a pit depth (also referred to as a header depth) is formed so that the pit depth is different from the groove depth.

In accordance with the present preferred embodiment, firstly, resist is coated onto a glass stamper, and laser beam cutting is performed. However, it is also possible to use a quartz stamper. At this time, the table of contents (TOC) portion is not formed by (laser beam recorder) LBR cutting. Next, developing, baking, and RIE (Reactive Ion Etching) are performed, accompanied by direct forming of grooves in the stamper. Continuing, the resist is peeled off. At this point in time, the stamper directly has a groove depth of 40 nm, and the groove depth is such that tracking is easily followed, and the playback CNR can be increased.

Resist is then coated onto the manufactured stamper, and laser beam cutting of the TOC portion is performed. Developing, baking, and RIE (Reactive Ion Etching) are performed. At this time, because only the TOC portion is exposed, etching by RIE occurs only in the TOC portion. It is possible to control the groove depth according to the etching time. However, in accordance with the present preferred embodiment, the depth of the TOC is about 110 nm. Next, the resist is peeled off. In accordance with the above-described process, a stamper can be manufactured in which the groove depth are header depth are different.

Using a stamper manufactured in the above-described manner, injection molding is performed using polycarbonate resin. If a magneto-optical disk is formed, the disk can be obtained by film formation with a magneto-optical medium (SiN/TbFeCo/SiN). If a phase change disk is formed, a film is formed of a phase change recording medium ($ZnS-SiO_2$/GeSbTe/$ZnS-SiO_2$ and the like), and a phase change is obtained.

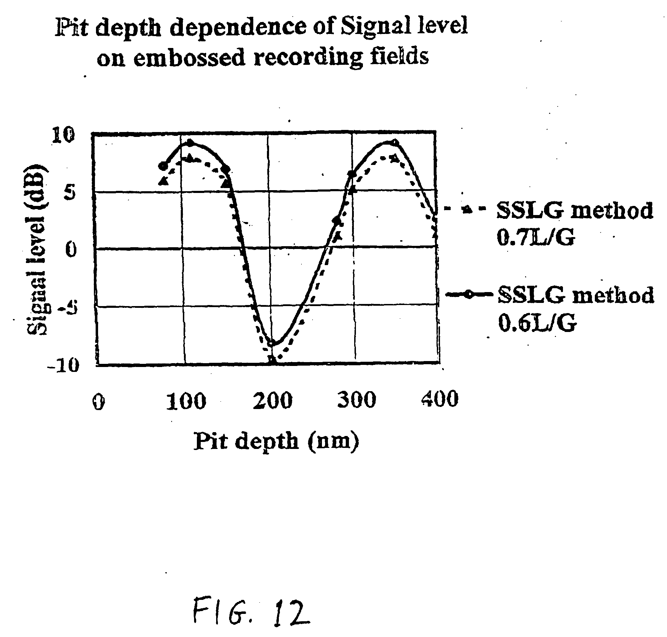

FIG. 12 illustrates a relationship between a signal level and the pit depth in accordance with the present preferred embodiment of the invention. The wavelength ($\lambda$) of the semiconductor of the optical pickup used in the evaluation of the disks is 685 nm, and a condensing lens is used having a numerical aperture (N.A.) 0.6.

In the manufacture of a Single Spiral Land Groove (SSLG), when the track pitch is 0.6 $\mu$m and 0.7 $\mu$m, with an irradiating light of wavelength $\lambda$, when the refractive index of the disk substrate is n, and when the pit depth is $\lambda/(5.7n)$ to $\lambda/(2.8n)$, or is $\lambda/(1.66n)$ to $\lambda/(1.1n)$, a sufficient signal level is obtained from the embossed pits. Because the signal level increases further with a further narrowing of the track pitch, when the track pitch is narrowed the above-described range of the pit depth can be widened.

In a phase change disk, with a pit depth of $\lambda/(5.7n)$ to $\lambda/(2.8n)$, or $\lambda/(1.66n)$ to $\lambda/(1.1n)$, by adjusting the groove depth from which the respective signal comes to $\lambda/(3.78n)$, in addition to good signal quality, it is possible to provide an optical disk with good properties with respect to cross-erasure, crosstalk and the like.

In a magneto-optical mini-disk (MD-MO), the TOC, if the pits are deep (about 110 nm), the playback signal level becomes good. Moreover, when the groove depth for writing and playback is made shallow, tracking becomes easy, and the playback CNR can increase.

By changing the depth of the respective pit and groove portions, it is possible to provide a MD with good signal quality.

In accordance with another preferred embodiment of the present invention, the roughness of the surface is 1 nm or less, and is prepared using the following procedure. Specifically, using a quartz stamper which is precision polished to a surface accuracy of about 0.5 nm, the surface is coated with photoresist. Next, exposure is effected by LBR and the like, and the surface is developed. Then, using RIE, grooves are directly prepared in the stamper. After this, by removing the photoresist, the roughness of the surface is made 1 nm or less. A recording film is formed on a plastic substrate having a surface roughness of 1 nm or less formed in accordance with the present preferred embodiment.

The wavelength (λ) of the semiconductor of the optical pickup used in the evaluation of the disks is 685 nm, and a condensing lens is used of numerical aperture (N.A.) 0.6.

By making the surface roughness 1 nm or less, the noise level is reduced by 3 dB. The effect of reducing the noise level occurred in a MO or phase change medium and the like.

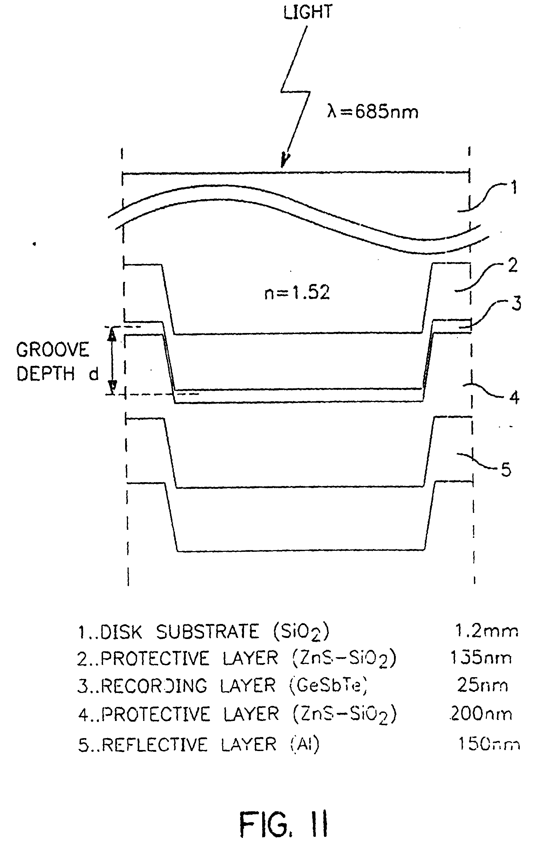

Furthermore, in accordance with embodiments of the present invention, the optical disk has been described as centered on the quenching structure of the optical disk (FIG. 1). However, the present invention is not limited to an optical disk having a quenching structure. For example, as shown in FIG. 11, an optical disk having a slow cooling structure can be formed by making the second protective layer 4 thicker, to about 200 nm, and by thinning the reflective layer 5, which is a heat emitting portion, to about 20 nm.

Effects similar to those described above can be obtained in practical use by making the groove depth deep, even in an optical disk having a slow cooling structure. For example, the measurement data relating to an optical disk having a slow cooling structure is shown by the white triangles in FIG. 4. As shown in FIG. 4, data having about the same slope is obtained for the slow cooling structure as for the optical disk having the quenched structure.

Moreover, in accordance with the embodiments of the invention described above, glass is used as the disk substrate. However, the disk substrate is not limited to a glass material. Generally, the disk substrate is preferably a material having the characteristics of good heat resistance, low moisture absorption, and small warping. For example, polycarbonate, polymethyl methacrylate, polyolefin resins and the like may be used as the disk substrate.

Furthermore, in accordance with the embodiments of the present invention described above, ZnS-SiO$_2$ is used as the protective layers 2, 4. However, the present invention is not limited to ZnS-SiO$_2$ as the protective layers 2, 4. Generally, the protective layers 2, 4 are preferably a thermally stable material. For example, oxides, nitrides, chalcogenides, fluorides, carbides and the like of metals or semimetals, may be used.

Moreover, in accordance with the embodiments of the present invention described above, an alloy formed of GeSbTe is used as the recording layer 3. However, the present invention is not limited to GeSbTe as the recording layer 3. Generally, the recording layer 3 material is one which maintains a stable amorphous state at room temperature, and also has a large optical change between the amorphous state and a crystalline state. For example, InSbTe, InSbTeAg, GaSb, InGaSb, GeSnTe, AgSbTe and the like may be used as the recording layer 3.

Furthermore, in accordance with the embodiments of the invention described above, Al is used in the reflective layer 5. However, the present invention is not limited to Al as the reflective layer 5. Generally, the reflective layer 5 may be any metal film which reflects light. For example, Au, Ti, Ni, Cu, Cr, Si and the like may be used as the reflective layer 5. Moreover, by adjusting the film thickness or refractive index of other layers, the optical disk can have a structure which does not use a reflective layer 5.

Moreover, the optical disk in accordance with the present invention may also have a structure with a SiO$_2$ layer having a small coefficient of thermal expansion added between the dielectric protective layer 4 and the reflective layer 5.

Moreover, the optical disk in accordance with the present invention may also have a structure with a SiO$_2$ layer + ZnS-SiO$_2$ and the like protective layer, added between the dielectric protective layer 4 and the reflective layer 5.

Furthermore, the optical disk may also have a structure with a reflective layer formed of Au or the like between the substrate 1 and the dielectric protective layer 2.

The recording performance of a phase change type optical disk increases by arranging a reflective layer in the outermost layer. In particular, in the case of an overwrite medium, the number of rewritings increases, and cross-erasure can be suppressed. Accordingly, the more cross-erasure can be avoid, the higher the capacity of the optical disk that can be obtained.

Further, in accordance with embodiments of the present invention, the substrate of an optical disk of the phase change type having the land and groove depth described in accordance with the present invention may comprise from the substrate side, a layer formed of ZnS-SiO$_2$, a layer formed of nitride or oxide, a recording layer, a layer formed of nitride or oxide, and a layer formed of ZnS-SiO$_2$. The nitride layer may comprise, for example, SiN, GeN or the like.

In accordance with embodiments of the present invention, it is effective to use a blue laser as an irradiating source for the optical disk (λ is about 415 nm). Since the diameter of the laser beam spot is smaller for a blue laser than for a red laser (λ about 650 nm), the mark length can be smaller, and the track pitch can be narrowed. However, with the groove depth of 85-200 nm, by making the track pitch 0.30-0.36 μm, it is possible to obtain an optical disk equivalent to a 15 GB HD-DVD-RAM. When the track pitch is made 0.30 μm or less, problems arise of inferiority of jitter, and of tracking, cross-erasure, crosstalk, and CNR. Moreover, when the groove depth is shallower than 85 nm, problems arise of cross-erasure and of poor erasure efficiency.

Moreover, in accordance with the embodiments of the invention described above, the wavelength λ of the laser light of the optical pickup is described as 685 nm. However, there is no limitation to the wavelength of laser light. For example, the wavelength λ of the laser light may be shortened to 410 nm.

As described hereinabove, since the groove depth is set at $\lambda/(3.78n)$ or more, the heat transmission distance between the land portions and the groove portions becomes long. As a result of the lengthened heat transmission distance, the transmission of the radiant heat of the illumination light to adjacent tracks becomes poor, and cross-erasure and cross-writing due to heat transmission are reduced.

Moreover, since, in accordance with embodiments of the present invention, the transmission of heat to adjacent tracks is poor, the heat tends to remain on a track. Because the transmission of heat to an adjacent track is poor, when erasing a recording mark it is possible for the amorphous state to remain for a long time in the vicinity of the crystallization temperature. As a result, the crystallization efficiency of the amorphous portion increases, and erasure efficiency increases.

Furthermore, measurement results clearly demonstrate that by making the groove depth of the optical disk deep, the margin of change of erasure power and recording power can increase. In particular, by limiting the groove depth to $\lambda/(3.78n)$ or more, even in the case of a track pitch of 0.6 $\mu$m, it is possible to maintain a value of cross-writing resistance Pw/Pp of one (1) or more at which practical use is possible.

In accordance with embodiments of the present invention, the groove depth is set at $\lambda/(3n)$. By setting the land/groove optical path difference in this manner, crosstalk from adjacent tracks is minimized.

In accordance with embodiments of the invention, the groove depth is set at $\{\lambda/(3n) + \lambda/(2n)\}$. By setting the land/groove optical path difference in this manner, crosstalk from adjacent tracks is minimized.

In accordance with embodiments of the invention, the groove depth is set at $\{\lambda/(6n) + \lambda/(2n)\}$. By setting the land/groove optical path difference in this manner, crosstalk from adjacent tracks is minimized.

In accordance with embodiments of the invention, because the roughness width of the groove sidewalls is set to 50 nm or less, the level of playback noise is reduced and it is possible to maintain a CNR of 45 dB. The CNR value of 45 dB is a value which satisfies the standard value of 45 dB of the CNR determined by the ISO standard.

In accordance with embodiments of the invention, because the roughness width of the groove sidewalls is set at 20 nm or less, the level of playback noise is reduced and it is possible to maintain a CNR of 48 dB. The CNR value of 48 dB is a value which can maintain a margin of 3 dB with respect to the standard value of 45 dB of the CNR which is determined by the ISO standard.

In accordance with embodiments of the invention, because the taper of the groove sidewalls is set to 60° or more, the change in the width of the groove sidewalls seen from the optical pickup is limited, and a value of cross-writing resistance of one (1) or more can be maintained, for which practical use is possible.

In accordance with embodiments of the invention, because the taper of the groove sidewalls is set to 80° or more, the change in the width of the groove sidewalls seen from the optical pickup is limited, and a value of cross-writing resistance of 1.1 or more can be maintained, for which practical use is possible.

In accordance with embodiments of the invention, because the taper of the groove sidewalls is set to 84° or more, the width of the groove sidewalls seen from the optical pickup is negligible, and the cross-writing resistance can be increased sharply.

As described hereinabove, in an optical disk to which the present invention has been applied, detrimental effects which accompany a reduction of the track pitch can be accurately reduced. Accordingly, a narrowing of the track pitch which is greater than the prior art is possible, and the optical disk can be designed to have a larger capacity, smaller size, etc.

Although a few preferred embodiments of the present invention have been shown and described, it will be appreciated by those skilled in the art that changes may be made in the embodiments without departing from the principles and spirit of the invention, the scope of which is defined in the appended claims and their equivalents.

**Claims**

1. An optical disk, comprising:

     a disk substrate having a refractive index of n;
     a land portion to record data using a phase change between amorphous and crystalline; and
     a groove portion to record data using a phase change between amorphous and crystalline, wherein $\lambda$ is the wavelength of an illuminating light, and a groove depth, which is the difference in level between the land portion and the groove portion, is at least $\lambda/(3.78n)$.

2. An optical disk as recited in claim 1, wherein the track pitch is narrower than 1.18 $\lambda$.

3. An optical disk as recited in claim 1, wherein the groove depth is in the range of $\lambda/(3.78n)$ to $\lambda/(1.13n)$.

4. An optical disk as recited in claim 1, wherein the groove depth is $\lambda/(3n)$.

5. An optical disk as recited in claim 1, wherein the groove depth is $\{\lambda/(3n) + \lambda/(2n)\}$.

6. An optical disk as recited in claim 1, wherein the groove depth is $\{\lambda/(6n) + \lambda/(2n)\}$.

7. An optical disk as recited in claim 1, wherein the width of a groove sidewall is at least 50 nm.

8. An optical disk as recited in claim 1, wherein the width of a groove sidewall is at least 20 nm.

9. An optical disk as recited in claim 1, wherein a taper angle of a groove sidewall is at least 60 degrees.

10. An optical disk of as recited in claim 1, wherein a taper angle of a groove sidewall is at least 80 degrees.

11. An optical disk as recited in claim 1, wherein a taper angle of a groove sidewall is at least 84 degrees.

12. An optical disk, comprising:

a substrate having a refractive index n;
a land portion; and
a groove portion,
wherein $\lambda$ is the wavelength of an illuminating light, a groove depth, which is a difference in level between the land portion and the groove portion, is at least $\lambda/(3.78n)$, and a groove sidewall has a roughness width of at most 50 nm.

13. An optical disk as recited in claim 12, wherein recording is performed in the respective land portion and groove portion using a phase change between amorphous and crystalline.

14. An optical disk as recited in claim 12, wherein a taper angle of the groove sidewall is at least 60°.

15. An optical disk as recited in claim 12, wherein a taper angle of the groove sidewall is at least 80°.

16. An optical disk as recited in claim 12, further comprising an outermost reflective layer.

17. An optical disk as recited in claim 12, wherein the groove depth is in a range of $\lambda/(3.78n)$ to $\lambda/(1.13n)$.

18. An optical disk as recited in claim 12, wherein the groove depth is $\lambda/(3n)$.

19. An optical disk as recited in claim 12, wherein the groove depth is $\{\lambda/(3n) + \lambda/(2n)\}$.

20. An optical disk as recited in claim 12, wherein the groove depth is $\{\lambda/(6n) + \lambda/(2n)\}$.

21. An optical disk as recited in claim 12, wherein a track pitch is narrower than 1.18 $\lambda$.

22. An optical disk as recited in claim 12, further comprising a recording phase layer and layers above and below the recording phase layer, wherein recording and playback is performed in the recording phase layer using a phase change of amorphous and crystalline, and the layers above and below the recording phase layer include nitride added to ZnS-$SiO_2$.

23. An optical disk having a recording layer, comprising:

a plastic substrate having a refractive index n, and a surface layer portion and an inner portion;
a land portion in which recording and playback are performed; and
a groove portion in which recording and playback are performed,
wherein $\lambda$ is the wavelength of an illuminating light, the groove depth, which is a difference in level between the land portion and the groove portion is at least $\lambda/(3.78n)$, a density of the surface layer portion of the plastic substrate is different from a density of the inner portion of the plastic substrate, and a thickness of the surface layer portion is about 60-500 nm.

24. An optical disk having a recording layer, comprising:

a land portion in which recording and playback are performed;
a groove portion in which recording and playback are performed; and
a pit,
wherein a groove depth, which is the difference in level between the land portion and the groove portion, is at least $\lambda/(3.78n)$, and the pit depth and the groove depth are different.

25. An optical disk as recited in claim 24, further comprising a disk substrate,
wherein $\lambda$ is the wavelength of an illuminating light, n is a refractive index of the disk substrate, and the pit depth is $\lambda/(5.7n)$ to $\lambda/(2.8n)$.

26. An optical disk as recited in claim 24, further comprising a disk substrate,
wherein $\lambda$ is the wavelength of an illuminating light, n is a refractive index of the disk substrate, and the pit depth is $\lambda/(1.66n)$ to $\lambda/(1.1n)$.

27. An optical disk, comprising:

a recording layer including a land portion and a groove portion in which recording and playback are performed in at least one of the land portion and the groove portion,
wherein a surface roughness of the optical disk is at most 1 nm.

28. An optical disk comprising a disk substrate having a refractive index n, a land portion and a groove portion for recording data, wherein the groove depth is at least $\lambda/(3.78n)$ where $\lambda$ is the wavelength of a light beam suitable for use with the optical disk.

LIGHT

$\lambda = 685nm$

$n = 1.52$

1

2

3

4

5

GROOVE DEPTH d

1..DISK SUBSTRATE ($SiO_2$)          1.2mm

2..PROTECTIVE LAYER ($ZnS-SiO_2$)   $\sim$ 135nm

3..RECORDING LAYER (GeSbTe)          25nm

4..PROTECTIVE LAYER ($ZnS-SiO_2$)    20nm

5..REFLECTIVE LAYER (Al)             150nm

FIG. 1

FIG. 2

FIG.3

FIG.4

FIG.5

FIG.6

16

RIOGHNESS OF GROOVE SIDEWALLS ABOUT 150nm

FIG. 7A

ROUGHNESS OF GROOVE SIDEWALLS ABOUT 20nm

FIG. 7B

EP 0 880 130 A2

| ROUGHNESS OF GROOVE SIDEWALLS ABOUT 150nm (PRIOR ART) | | |
|---|---|---|
| ROUGHNESS OF GROOVE SIDEWALLS 50nm OR LESS | | ← 3dB DOWN |
| ROUGHNESS OF GROOVE SIDEWALLS 20nm OR LESS | | ← 6dB DOWN |

| | | | |
|---|---|---|---|
| NOISE LEVEL [dBm] | -66 | -63 | -60 |
| CNR [dB] | 48 | 45 | 42 |

# FIG.8

{ GROOVE DEPTH=180nm

TRACK PITCH=0.5μm

GROOVE SIDEWALL

TAPER ANGLE θ

DISK SUBSTRATE

## FIG.9

GROOVE DEPTH=180nm

TRACK PITCH=0.6 μm

TRACK PITCH=0.5 μm

TAPER ANGLE θ (DEGREES)

## FIG. 10

LIGHT

$\lambda = 685nm$

$n = 1.52$

GROOVE DEPTH d

1..DISK SUBSTRATE ($SiO_2$)          1.2mm
2..PROTECTIVE LAYER ($ZnS-SiO_2$)    135nm
3..RECORDING LAYER (GeSbTe)          25nm
4..PROTECTIVE LAYER ($ZnS-SiO_2$)    200nm
5..REFLECTIVE LAYER (Al)             150nm

FIG. II

## Pit depth dependence of Signal level
## on embossed recording fields

FIG. 12